# EUROPEAN PATENT SPECIFICATION

(11) **EP 2 045 209 B1**
(45) Date of publication and mention of the grant of the patent: **04.12.2013**
(21) Application number: 08165028.5
(22) Date of filing: 24.09.2008
(51) Int. Cl.: B67C 3/28, B65B 3/32, A23G 3/02, A23G 7/00

(54) **Dosing device for liquid or paste-like food substances**
Dosiervorrichtung für flüssige oder pastöse Lebensmittelsubstanzen
Dispositif de dosage pour substances alimentaires liquides ou de type pâtes

(30) Priority: 27.09.2007 IT TO20070680
(43) Date of publication of application: 08.04.2009
(73) Proprietor: Bonato, Francesco, 20125 Milano (IT)
(72) Inventor: Bonato, Francesco, 20125 Milano (IT)
(74) Representative: Bosotti, Luciano

(56) References cited:
- EP-A- 1 491 445
- EP-A- 1 762 539
- US-A- 5 019 127

## Description

The object of the present invention is a dosing device for a liquid or paste-like substance, such as, for example, a greasy substance, of the type comprising a reservoir suitable for containing the above-said substance and provided with at least one mouth for the entrance of the substance and with at least one opening for dosing of the substance, and further comprising means for controlling delivery of the substance through the above-said dosing opening.

In particular, the present invention refers to dosing devices provided with a plurality of dosing openings or holes that are predisposed for simultaneously delivering multiple single quantities of a liquid or paste-like substance.

EP-A-1 491 445 discloses a device for portioning flowable food products comprising pistons which communicate with chambers, and dispensing means which are controlled by synchronisation and control means.

Dosing devices of the type described above are available that are specifically designed to be used in continuous flow production circuits for sweet products, wherein such devices realise specific phases of the above-said circuits. Dosing devices of this type have an extremely complex system wherein each dosing hole is controlled by a corresponding delivery control means, for example a dedicated electrovalve and/or piston. A central control station provides for the management of the operations of the dosing holes and for their coordination with the production needs of the circuits in which such devices are inserted.

Dosing devices as described above are only suitable and functional when used in production circuits destined for the production of large amounts of products, so that cost of installation and maintenance of the devices is amortized over a short useful life of the circuit. Furthermore, the operative configuration of these systems is little flexible, so that they can only be destined to the specific production circuits for which they were designed.

Furthermore, dosing devices exist in the field in question that are destined to craft production that are characterised by a very simple and low-cost system, but that, however, show scarce operational performances, acceptable only in the context of small and limited production contexts.

Therefore, in the technical field considered the need is felt for dosing devices to be destined to industrial production contexts characterised by a highly diversified commercial offering, set up, for example, on contract production. Dosing devices of this type must necessarily be configurable depending on production needs, which in the industrial context in question are continuously variable, and at the same time must guarantee high production capacities and a technically advanced type of functioning.

Furthermore, dosing devices of this type are required also in artisan-scale production contexts susceptible of being expanded.

The object of the present invention is that of satisfying the above-stated needs by providing a dosing device provided with an extremely compact system and provided with a high quality standard of functioning. Such object is achieved providing a dosing device having the characteristics included in claim 1.

The invention will now be described, in detail, by way of non-limiting example only, with reference to the enclosed drawings, wherein:

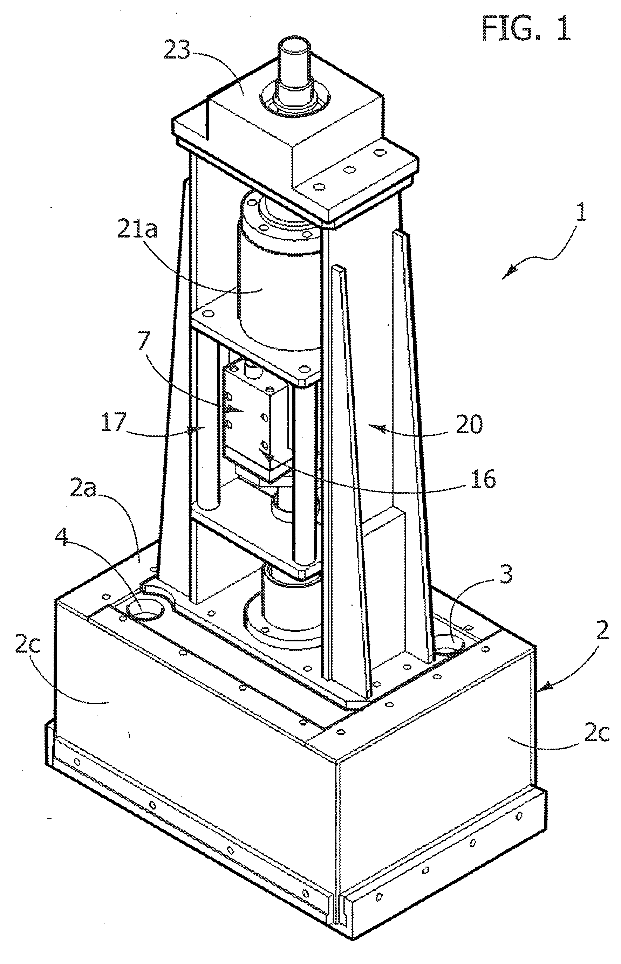

- figure 1 represents a schematic prospective view of a dosing device according to the invention;
- figure 2 represents a view in section of the dosing device in figure 1;
- figure 3 represents a view in section of a detail of the device in figure 1;
- figures 4a to 4d represent successive phases of the functioning scheme of the dosing device according to the invention.

The reference number 1 indicates a dosing device for liquid, paste-like or greasy food substances, such as, for example, chocolate creams. Such device comprises a reservoir 2 having a substantially cylindrical body with a parallelepiped shape, and comprising an upper wall 2a, a bottom wall 2b and side walls 2c. The upper wall 2a is traversed by a first and a second mouth 3, 4 communicating with the inside of the reservoir and each controlled by a corresponding one-way valve (not shown in the figures) in ways that will be described later. The bottom wall 2b of the reservoir is formed by a plate provided with a multiplicity of holes 5 communicating directly with the inside of the reservoir and suitably arraigned in a matrix-like scheme. Such plate 2b is fixed to the side walls 2c of the reservoir by means of screws so that it can be easily disassembled and interchanged with additional plates for purposes that will be described later.

The side walls 2c of the reservoir, which can be realised in steel, cast iron, aluminium, or in other material, have an internal jacket inside of which a thermal fluid vector is made to run for the controlled thermal conditioning of the food substance inside of the reservoir 2. The thermal conditioning may also occur through wrapped bundles of tubing, in contact with the reservoir.

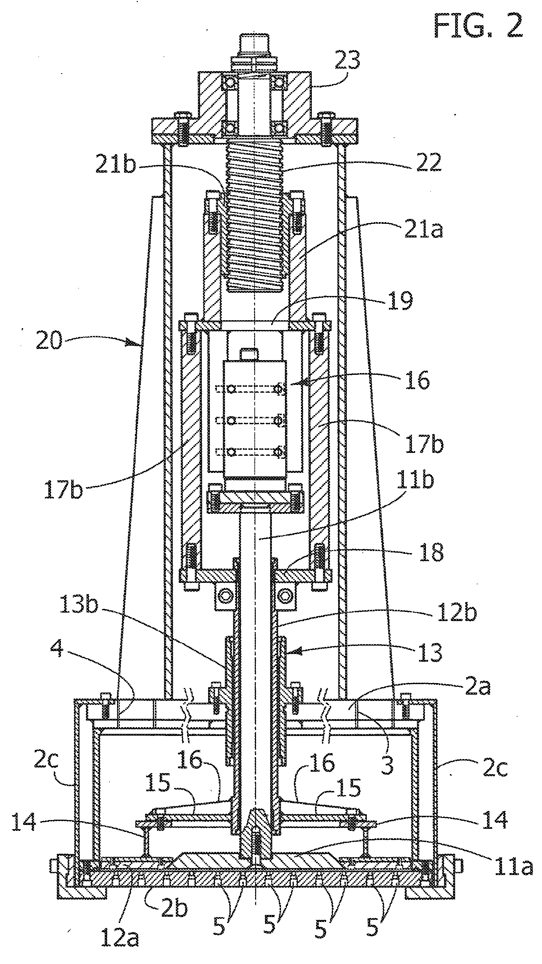

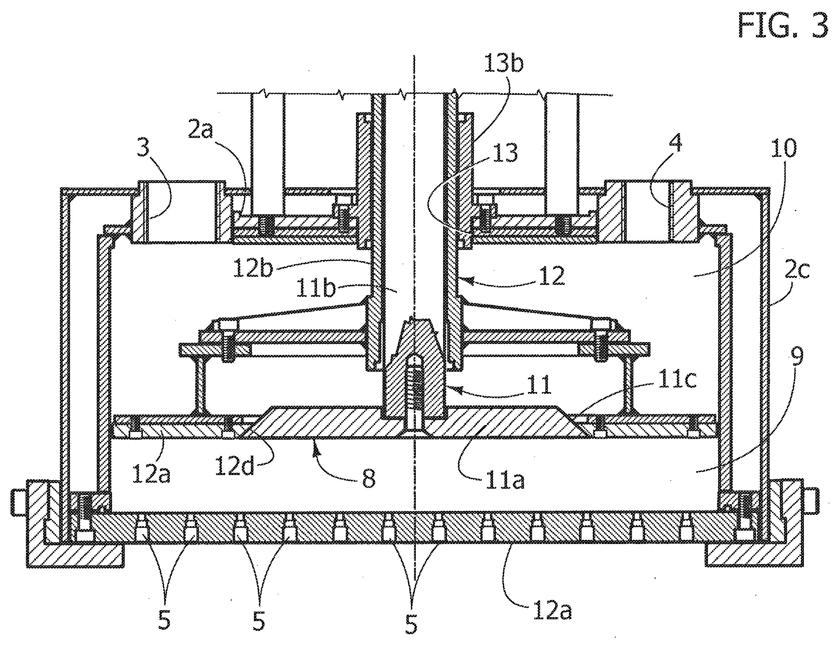

On the reservoir 2 a movable piston group comprising a piston portion 8 inside the reservoir (visible in figures 2 and 3) translatable along an axial direction of the reservoir body.

As is visible in figure 3, the piston portion 8 has a plane of thrust that is perpendicular to the axial direction of the reservoir body and provided with an extension equal to the transversal section of the volume enclosed inside the reservoir itself. In this way, the piston portion 8 divides the inside of the reservoir into a lower chamber 9 and an upper chamber 10.

The lower chamber 9 communicates with the holes 5 of the bottom plate 2b, while the upper chamber 10 communicates with the mouths 3, 4 of the upper wall 2a.

The piston group is formed by a valve element 11 and by a thrust element 12, having corresponding extremity portions 11a and 12a that are coaxial and suitable to globally constitute the piston portion 8, and respective elongated portions 11b, 12b also coaxial with each other and extending outside of the reservoir through the opening 13 provided on the upper wall 2a of the latter.

In particular, the extremity portion 11a of the valve element 11 has a disk configuration and is connected by means of a screw in correspondence to one of its central portions to a stem extending outside of the reservoir and that constitutes the elongated portion 11b. The terminal portion 12a of the thrust element 12 is also formed by a plate provided with a circular central opening 12c that is configured complimentary to the disk 11a of the valve element 11. The plate 12a is connected by means of vertical brackets 14 to a support plate 15 that is solidly splined to the elongated portion 12b constituted of a tubular concentric element and external to the stem 11b, and extending, as the latter does, outside of the reservoir through the opening 13. A guide bushing 13b is located between the opening 13 and the tubular element 12b, suitable for guiding the translation of the tubular element 12b and to guarantee a perfect seal to the passage of food substance, or of pollutants from outside, through the same opening 13. Stiffening ribs 24 are also fixed to the plate 15 and attached to the tubular element 12b so to further stiffen the structure of the thrust element 12.

The valve element 11 and the thrust element 12 are movable relative to each other and with respect to the reservoir in the way that will be described later.

In particular, with reference to figure 3, the plate 12a is provided with an edge 12d delineating its central opening 12c, which constitutes an abutting surface predisposed to act on a corresponding surface of the edge 11c of the disk 11a of the valve element 11. In the embodiment shown in the figures such complimentary surfaces have a substantially truncated cone conformation. Preferably, the inclination of the planes identified by the edges 12d and 11c with respect to the direction of motion of the valve element 11 and of the thrust element 12, is a value of approximately 45° for reasons that will be described later.

The thrust element 12 is predisposed for pushing the valve element 11 in a downward movement by means of the contrast surface 12d described above. Such abutting surface of the thrust element 12 constitutes, also, a stop for the upward translational movement of the valve element 11.

The valve element 11 and the thrust element 12 are connected to respective actuator means. With reference to figure 2, the stem 11b of the valve element 11 is connected to a hydraulic actuator 16 that is held by a support structure 20 over the reservoir 2. The actuator 16 can be a conventional type of actuator, such as, for example, an oil-operated hydraulic jack or a screw and bolt mechanical drive system.

Instead, the tubular element 12b is connected by a screw and bolt transmission system. In particular, the upper extremity of the tubular element 12b is connected with a cage-like structure 17 surrounding the above cited hydraulic actuator 16. The cage-like structure 17 is conformed so to be able to translate relative to the actuator group 16 without interfering with the latter. The cage-like structure 17 is formed by a plate 18, splined to the upper extremity of the tubular element 12b, and below the actuator group 16, which is connected to an additional plate 19 above the actuator group 16, through a plurality of rods 17b substantially parallel to the translational direction of the thrust element 12 and fixed to plates 18, 19 by means of screws.

The upper plate 19 of the cage-like structure 17 is solidly fixed to a tubular guide 21a that in turn is attached by means of screws to the internally threaded bushing 21b concentric to it. The internal threading of the bushing 21b interacts with the external threading of a shaft 22 arraigned along the axis of the tubular element 12b of the thrust element 12 and that is mounted on an upper beam 23 of the supporting structure 20 so to be free to rotate. The shaft 22 is driven in rotation by a step by step electric motor. The rotation imparted to the shaft 22 causes, by means of the interaction of the threaded surfaces of the shaft 22 itself with those of the bushing 21, a translation along the vertical direction (with reference to the figures) of the cage-like structure that drags the thrust element 12 with it.

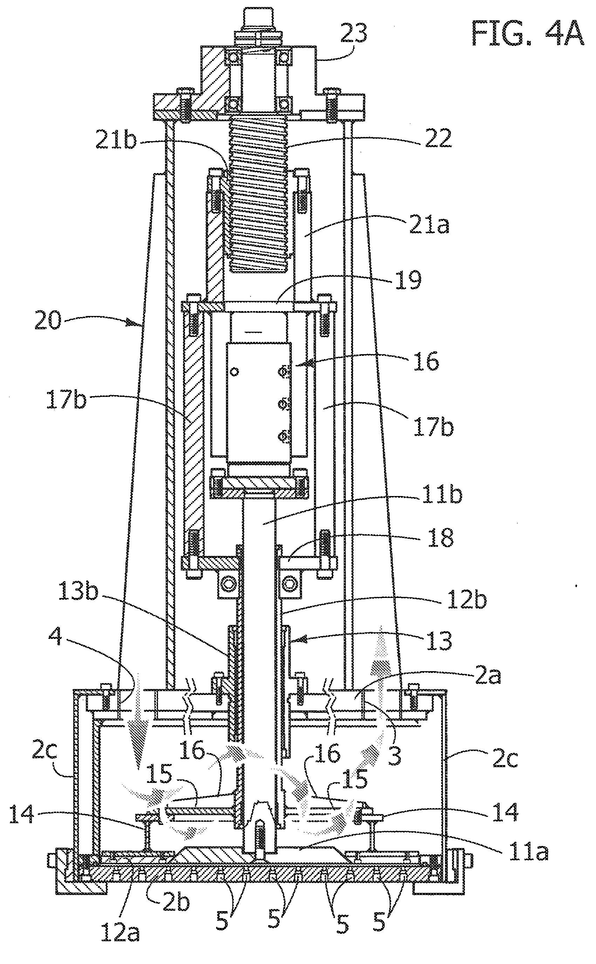

Now the functioning of the dosing device according to the invention will be described. Successive functioning phases of the dosing device described herein are schematically represented in figures 4a to 4d. The arrows represented in the figures indicated the flow of the food substance to be dosed.

First of all, as is visible in the figures, during the functioning of the dosing device described herein a continuous flow through the reservoir of the food substance that enters from the mouth 3 and exits from the mouth 4 in correspondence to the upper wall 2a of the reservoir, is maintained. The pressure of the flow entering into and exiting from the reservoir is determined by the action of the above-cited one-way valves associated with the mouths 3 and 4. The continuous flow through the reservoir 2 constitutes a very important characteristic of the dosing device described herein since it allows, during normal functioning of the device, the transport of food substance to be dosed to treatment stations (not shown) with the aim of maintaining the food substance in the ideal conditions required for the delivery operation. For example, the continuous flow of food substance that occurs outside of the reservoir can pass through filtration and/or thermal treatment stations.

Figure 4a shows an initial phase in which the piston group has the piston portion 8 in the composed position and in a lowered position.

In the condition shown in figure 4a the above-cited continuous flow of food substance flows only through the upper chamber 10 of the reservoir 2, since the lower chamber 9 is separated from the mouths 3 and 4 by the piston portion 8. In the condition shown in figure 4a the lower chamber 9 is thus substantially empty.

From the condition of the device shown in figure 4a, for the purpose of performing the dosing operation of the food substance, the functioning of the dosing device described herein envisions the raising of the thrust element 12 relative to the reservoir and the valve element 11. Such movement of the thrust element 12 puts the upper chamber 10 in communication with the lower chamber 9, so that the flow of food substance consequently flows also inside of the latter.

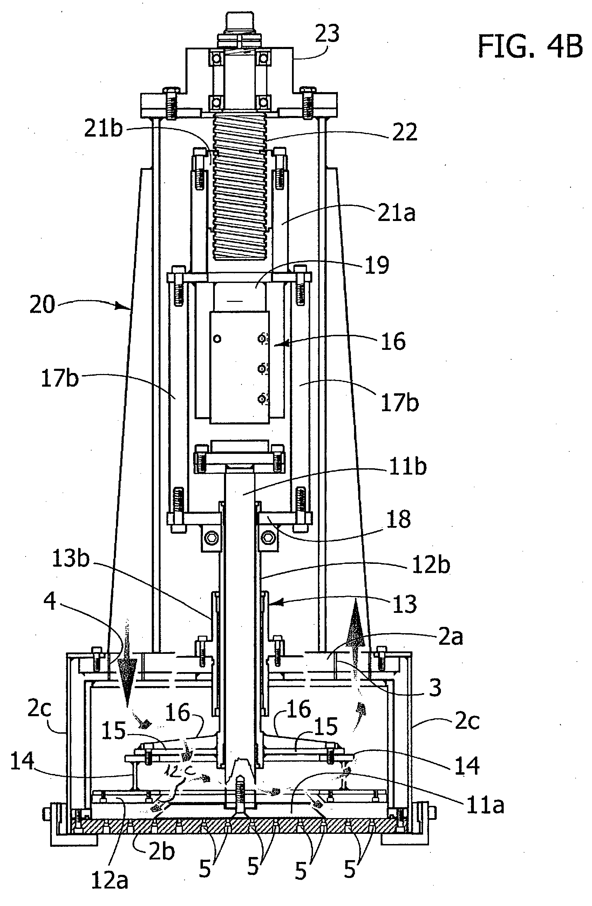

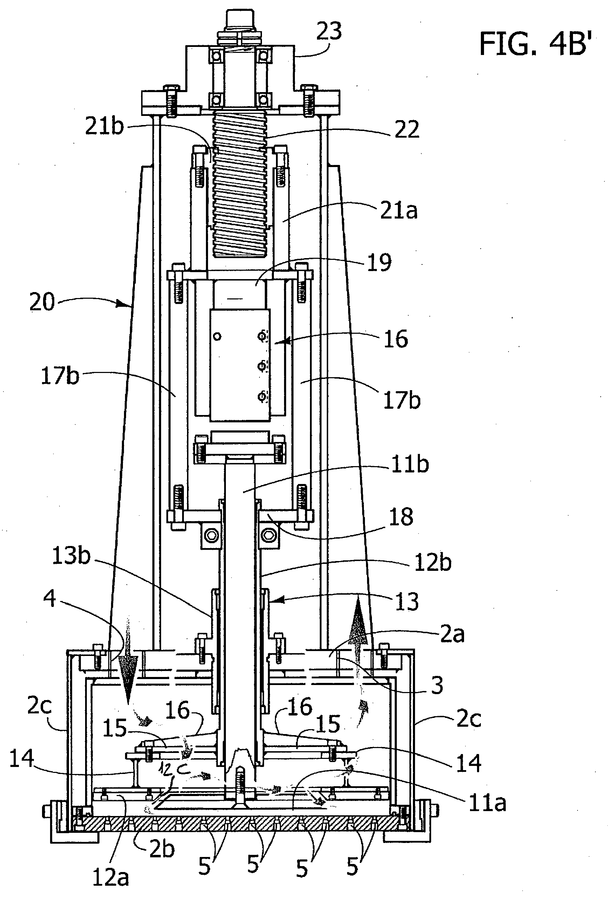

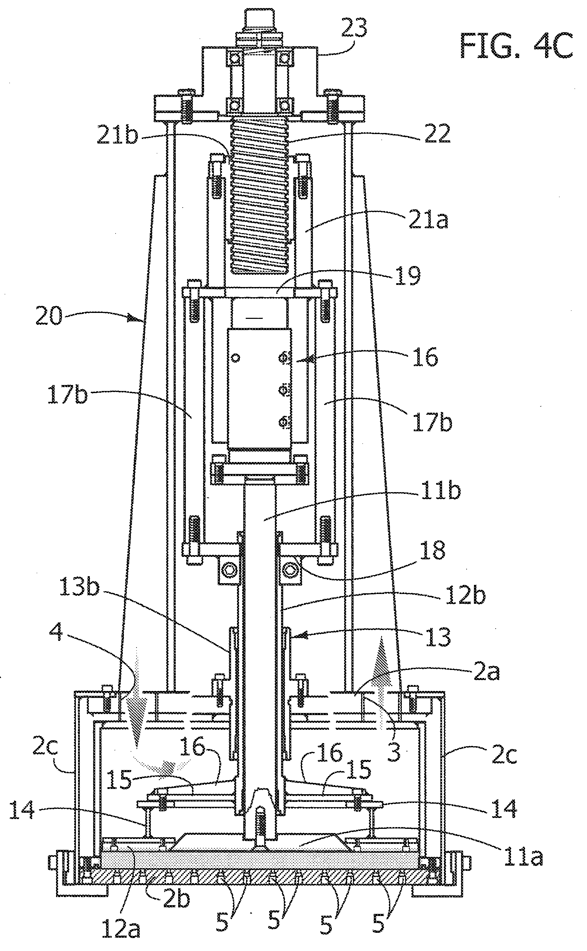

Successively, as is visible in figure 4b' the valve element 11 is also raised and its translational motion ends when the edge 11c of the disk 11b makes contact with the abutting surface 12d of the thrust element 12, closing the opening 12c of the latter, as is shown in figure 4c. Once these are again in contact separation is restored between the upper chamber 10 and the lower chamber 9, which in the mean time has been filled with a determined amount of food substance.

The truncated cone conformation with respect to the contrast surface 12d of the thrust element 12 and of the edge 11c of the valve element 11, allows the reduction of viscous friction generated by the food substance flowing through the thrust element 12 and the valve element 11 during the raising phase of the latter. As was mentioned previously, the inclination of the planes identified by the edges 12d and 11c with respect to the direction of movement of the valve element 11 and the thrust element 12, is preferably of a value around 45°, depending on the fluidity and runniness of the product to be poured.

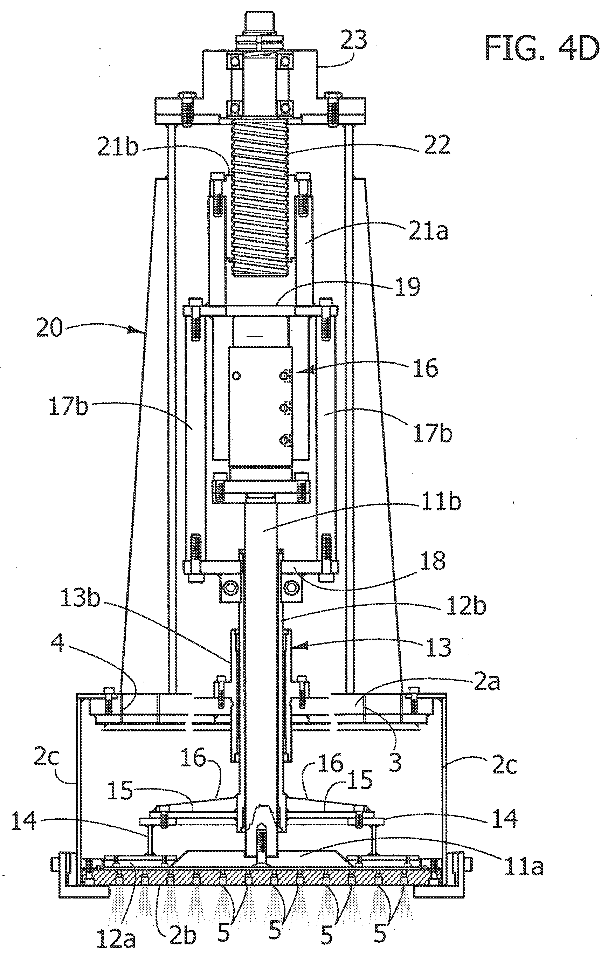

Furthermore, such conformation also allows the stabilisation of the valve element 11 during its movement and, also to guarantee a prefect seal against the passage of substance from one to the other of the upper and lower chambers in the condition of contact between the abutting surface 12d and the edge 11c. Finally, figure 4d represents the delivery phase of the food substance performed by the above described device, wherein the thrust element 12 pushes the valve element 11 downward with it so that they come down together in a reciprocal arrangement for which the piston portion is composed, so to make the food substance flow out of the reservoir through the dosing holes 5. When the thrust element 12 drags with it the valve 11, the latter is temporarily detached from the hydraulic actuator 16.

The quantity of food substance delivered depends on the height interval by which the piston portion 8 is lowered.

From what was stated above, it is clear that the height reached by the thrust element 12 with respect to the bottom of the reservoir in the condition represented in figure 4b, determines the deliverable amount during a single stroke of the piston portion 8. Furthermore, the stop of the piston portion 8 for the delivering operation depends on the density of the product delivered.

The plate 2b having dosing holes determines the number of individual quantities delivered simultaneously and their reciprocal arrangement.

For this purpose it is possible to envision different plates 2b that are interchangeable with each other so to predispose the dosing device for different functioning modes.

Furthermore, the piston group can be operatively predisposed so that for each delivery the cycle reproduced in figures 4a to 4d is carried out, or be envisioned that once the condition represented in figure 4c, in which the lower chamber is filled, is reached, consecutive deliveries are performed as shown in figure 4d. In such way, the dosing device described herein is susceptible of functioning at different delivering rates depending on the needs of the cycle and on the context into which the device is inserted. For example, in the case of an artisan-scale production context in which few deliveries per hour are required, it is preferable to envision successive full cycles, one of which is shown in figures 4a to 4d, so that between one delivery and another, which may occur even after a considerable amount of time, the food substance to be delivered is recirculated in the continuous flow through the reservoir so that it is maintained under the predetermined ideal conditions. Instead, in an industrial production circuit, wherein successive deliveries are envisioned within very short time intervals, it is possible to operate the dosing device in continuous mode in the delivery function represented in figure 4d, as described above.

The dosing device described herein is thus provided with an extremely flexible functioning and adjustable to different production contexts.

Furthermore, the dosing device described herein is suitable for the delivery of different food substances and the device preparation operations necessary to switch from the delivery of a first food substance to the delivery of a different second substance are carried out very quickly and essentially consist of washing the inside of the reservoir and substituting the delivery plate 2b. Specifically, a plate 2b used for a first substance is disassembled, then the inside of the reservoir is inverted and washed, and finally an additional plate 2b suitable for delivery of the second substance is mounted. The washing operation of the inside of the reservoir is greatly facilitated by the fact that, being bottomless, is easily accessible from outside.

The dosing holes 5 are preferably controlled by nozzles, each provided with a delivery flow control valve. These nozzles have the function of allowing the delivery of the food substance only during the downward movement of the piston portion 8 to thusly preventing the food substance from exiting freely from the reservoir through the dosing holes 5. However, in the cases in which the piston portion 8 is destined to operate within a translation stroke so that when it is in a raised position, the lower chamber 9 realises a hydrostatic stage of the food substance susceptible of generating a hydrostatic pressure lower than atmospheric pressure, it is not necessary to envision any regulation valve controlling the dosing holes 5 since the food substance remains inside the lower chamber 9 by effect of the atmospheric pressure acting on the food substance through the dosing holes 5.

Naturally, without prejudice to the underlying principle of the invention, the details of construction and embodiments may vary widely with reference to what has been described and illustrated by way of example only, without departing from the scope of the present invention, as defined by the following claims.

## Claims

1. A dosing device of a liquid or paste-like food substance, such as, for example, a greasy substance, comprising:
- a reservoir (2) suitable for containing said substance, said reservoir (2) being provided with at least one entrance mouth (3) of said substance inside of the reservoir and with at least one opening (5) for the delivery of said substance, and
- control means (11, 12) of the delivery of said substance through said at least one delivery opening (5);
said device being **characterised in that** said reservoir (2) is provided with a plurality of said delivery openings (5) in correspondence to a bottom wall (2b) and is predisposed to receive a piston group (11, 12) of said control means that is mounted slidable inside the reservoir and conformed so to separate said reservoir into a first chamber (9), onto which said delivery openings (5) open, and into a second chamber (10) communicating with said entrance mouth (3), said chambers (9, 10) being of volumes variable with the translation of said piston group (11, 12),
wherein said piston group comprises a valve element (11) suitable for putting said first chamber (10) in communication with said second chamber (9).

2. The dosing device according to claim 1, **characterised in that** said reservoir (2) comprises an exit mouth (4) of said substance communicating with said upper chamber (10).

3. The dosing device according to claim 1, **characterised in that** said reservoir (2) has a body (2a, 2b, 2c) which encloses internally a substantially cylindrical volume inside of which said piston group (11, 12) is mounted slidable along an axial direction of said volume, wherein said piston group (11, 12) has an active thrust section (8) substantially equal to the internal transversal section of said cylindrical volume.

4. The dosing device according to claim 3, **characterised in that** said piston group (11, 12) comprises a thrust element (12) having a plate (12a) with a central hole (12c), and whose perimeter edge is substantially in contact with inner walls of the body of the reservoir, which are substantially parallel to the translation direction of said piston group, said plate representing one part (12a) of said active surface of said piston group (11, 12), said valve element representing the remaining part (12b) of said active surface.

5. The dosing device according to claim 4, **characterised in that** said valve element (11) has a disk portion (11a) on which is obtained said remaining part of said active surface, said disk portion (11a) being substantially concentric to said plate (12a) centrally perforated.

6. The dosing device according to claim 5, **characterised in that** said thrust element (12) is predisposed for pushing said valve element (11) downward when abutting surfaces (12d) of said thrust element go against corresponding surfaces (11c) of said valve element (11), said valve element (11) being movable with respect to said thrust element (12) and said abutting surfaces (12d) constituting an upper limit to the movement of said valve element (11) within the reservoir (2).

7. The dosing device according to claim 6, **characterised in that** said abutting surfaces (12d) and said corresponding surfaces (11c) have a truncated cone conformation.

8. The dosing device according to claim 6, **characterised in that** first actuator means (16) suitable for moving said thrust element (12) and second actuator means (22, 21b) apt to moving said valve element (11) are envisioned.

9. The dosing device according to claim 1, **characterised in that** said valve element (11) comprises a substantially truncated cone surface (11d) suitable to control the communication between said first and second chamber (9, 10).

10. The dosing device according to claim 9, **characterised in that** the inclination of said surface (11d) with respect to the direction of motion of the valve element (11) is a value around 45°.

11. A method for the delivery of a dosed quantity of a food substance through a device according to one of the claims from 1 to 10, said method comprising:
- making said substance flow into said first chamber, said second chamber being isolated from said first chamber and said piston group being in a first position inside said reservoir;
- putting said first and second chambers in communication through the relative movement of said thrust element with respect to said valve element;
- closing said communication between said first and second chamber in a second position of said piston group inside of said reservoir;
- moving said piston group so that said substance is delivered through said delivery openings (5).

## Patentansprüche

1. Dosiervorrichtung für flüssige oder pastöse Lebensmittelsubstanzen, wie etwa eine schmierige Substanz, umfassend:
- einen Behälter (2), der sich dazu eignet, die Substanz aufzunehmen, wobei der Behälter (2) mit wenigstens einer Eintrittsmündung (3) für die Substanz im Inneren des Behälters und mit wenigstens einer Öffnung (5) für die Ausgabe der Substanz ausgestattet ist, und
- Steuereinrichtungen (11, 12) für die Ausgabe der Substanz durch die wenigstens eine Ausgabeöffnung (5);
wobei die Vorrichtung **dadurch gekennzeichnet ist, dass** der Behälter (2) mit einer Vielzahl der Ausgabeöffnungen (5) in Entsprechung mit einer Bodenwand (2b) versehen ist und dazu eingerichtet ist, eine Kolbengruppe (11, 12) der Steuereinrichtung aufzunehmen, die gleitend in dem Behälter angebracht und derart beschaffen ist, dass sie den Behälter in eine erste Kammer (9), zu der die Ausgabeöffnungen (5) geöffnet sind, und in eine zweite Kammer (10) teilt, die mit der Eintrittsmündung (3) in Verbindung steht, wobei die Kammern (9, 10) ein veränderbares Volumen mit der Verschiebung der Kolbengruppe (11, 12) haben,
und die Kolbengruppe ein Ventilelement (11) umfasst, das dazu geeignet ist, die erste Kammer (10) in Verbindung mit der zweiten Kammer (9) zu bringen.

2. Dosiervorrichtung nach Anspruch 1, **dadurch gekennzeichnet, dass** der Behälter (2) eine Austrittsmündung (4) für die Substanz hat, die mit der oberen Kammer (10) in Verbindung steht.

3. Dosiervorrichtung nach Anspruch 1, **dadurch gekennzeichnet, dass** der Behälter (2) einen Körper (2a, 2b, 2c) hat, der im Inneren ein im wesentlichen zylindrisches Volumen umschließt, in dem die Kolbengruppe (11, 12) gleitfähig entlang einer Achsrichtung des Volumens angebracht ist, wobei die Kolbengruppe (11, 12) einen aktiven Schubabschnitt (8) hat, der im wesentlichen gleich dem inneren Querschnitt des zylindrischen Volumens ist.

4. Dosiervorrichtung nach Anspruch 3, **dadurch gekennzeichnet, dass** die Kolbengruppe (11, 12) ein Schubelement (12) umfasst, das eine Platte (12a) mit einem zentralen Loch (12c) hat und dessen Umfangsrand im wesentlichen in Kontakt mit den Innenwänden des Körpers des Behälters ist, die im wesentlichen parallel zu der Verschieberichtung der Kolbengruppe sind, wobei die Platte einen Teil (12a) der aktiven Oberfläche der Kolbengruppe (11, 12) repräsentiert und das Ventilelement den übrigen Teil (12b) der aktiven Oberfläche repräsentiert.

5. Dosiervorrichtung nach Anspruch 4, **dadurch gekennzeichnet, dass** das Ventilelement (11) einen Scheibenabschnitt (11a) hat, auf dem man den übrigen Teil der aktiven Oberfläche erhält, wobei der Scheibenabschnitt (11a) im wesentlichen konzentrisch mit der Platte (12a) zentral perforiert ist.

6. Dosiervorrichtung nach Anspruch 5, **dadurch gekennzeichnet, dass** das Schubelement (12) dazu eingerichtet ist, das Ventilelement (11) nach unten zu schieben, wenn Anlageflächen (12d) des Schubelementes auf entsprechende Oberflächen (11c) des Ventilelementes (11) treffen, wobei das Ventilelement (11) in Bezug auf das Schubelement (12) beweglich ist und die Anlageflächen (12d) eine Obergrenze für die Bewegung des Ventilelementes (11) innerhalb des Behälters (2) bilden.

7. Dosiervorrichtung nach Anspruch 6, **dadurch gekennzeichnet, dass** die Anlageflächen (12d) und die entsprechenden Oberflächen (11c) eine kegelstumpfartige Ausbildung haben.

8. Dosiervorrichtung nach Anspruch 6, **dadurch gekennzeichnet, dass** erste Betätigungseinrichtungen (16), die sich zum Bewegen des Schubelementes (12) eignen, und zweite Betätigungselemente (22, 21 b) vorgesehen sind, die sich zum Bewegen des Ventilelementes (11) eignen.

9. Dosiervorrichtung nach Anspruch 1, **dadurch gekennzeichnet, dass** das Ventilelement (11) eine im wesentlichen kegelstumpfartige Oberfläche (11d) umfasst, die dazu eingerichtet ist, die Verbindung zwischen der ersten und der zweiten Kammer (9, 10) zu steuern.

10. Dosiervorrichtung nach Anspruch 9, **dadurch gekennzeichnet, dass** die Neigung der Oberfläche (11d) in Bezug auf die Bewegungsrichtung des Ventilelementes (11) einen Wert von etwa 45° hat.

11. Verfahren für die Ausgabe einer dosierten Menge einer Nahrungsmittelsubstanz durch eine Vorrichtung gemäß einem der Ansprüche 1 bis 10, wobei das Verfahren umfasst:
- Bewirken, dass die Substanz in die erste Kammer fließt, wobei die zweite Kammer von der ersten Kammer isoliert ist und sich die Kolbengruppe in einer ersten Stellung innerhalb des Behälters befindet;
- Herstellen einer Verbindung der ersten und der zweiten Kammer durch die Relativbewegung des Schubelementes in Bezug auf das Ventilelement;
- Schließen der Verbindung zwischen der ersten und der zweiten Kammer in einer zweiten Stellung der Kolbengruppe innerhalb des Behälters; und
- Bewegen der Kolbengruppe derart, dass die Substanz durch die Ausgabeöffnungen (5) ausgegeben wird.

## Revendications

1. Dispositif de dosage d'une substance alimentaire liquide ou de type pâte, telle que par exemple, une substance grasse, comprenant :
un réservoir (2) approprié pour contenir ladite substance, ledit réservoir (2) étant prévu avec au moins une bouche d'entrée (3) de ladite substance à l'intérieur du réservoir et avec au moins une ouverture (5) pour la distribution de ladite substance, et
des moyens de commande (11, 12) de distribution de ladite substance à travers ladite au moins une ouverture de distribution (5) ;
ledit dispositif étant **caractérisé en ce que** ledit réservoir (2) est prévu avec une pluralité desdites ouvertures de distribution (5) en correspondance avec une paroi inférieure (2b) et est prédisposé pour recevoir un groupe piston (11, 12) desdits moyens de commande, qui est monté de manière coulissante à l'intérieur du réservoir et conformé pour séparer ledit réservoir en une première chambre (9) sur laquelle lesdites ouvertures de distribution (5) s'ouvrent, et en un seconde chambre (10) communiquant avec ladite bouche d'entrée (3), lesdites chambres (9, 10) étant de volumes variables avec la translation dudit groupe piston (11, 12),
dans lequel ledit groupe piston comprend un élément de valve (11) approprié pour mettre ladite première chambre (10) en communication avec ladite seconde chambre (9).

2. Dispositif de dosage selon la revendication 1, **caractérisé en ce que** ledit réservoir (2) comprend une bouche de sortie (4) de ladite substance, communiquant avec ladite chambre supérieure (10).

3. Dispositif de dosage selon la revendication 1, **caractérisé en ce que** ledit réservoir (2) a un corps (2a, 2b, 2c) qui enferme à l'intérieur un volume sensiblement cylindrique, à l'intérieur duquel est monté ledit groupe piston (11, 12) pouvant coulisser le long d'une direction axiale dudit volume, dans lequel ledit groupe piston (11, 12) a une section de poussée active (8) sensiblement égale à la section transversale interne dudit volume cylindrique.

4. Dispositif de dosage selon la revendication 3, **caractérisé en ce que** ledit groupe piston (11, 12) comprend un élément de poussée (12) ayant une plaque (12a) avec un trou central (12c), et dont le bord périmétral est sensiblement en contact avec des parois internes du corps du réservoir qui sont sensiblement parallèles à la direction de translation dudit groupe piston, ladite plaque représentant une partie (12a) de ladite surface active dudit groupe piston (11, 12), ledit élément de valve représentant la partie résiduelle (12b) de ladite surface active.

5. Dispositif de dosage selon la revendication 4, **caractérisé en ce que** ledit élément de valve (11) a une partie de disque (11a) sur laquelle est obtenue ladite partie résiduelle de ladite surface active, ladite partie de disque (11a) étant sensiblement concentrique à ladite plaque (12a) perforée au centre.

6. Dispositif de dosage selon la revendication 5, **caractérisé en ce que** ledit élément de poussée (12) est prédisposé pour pousser ledit élément de valve (11) vers le bas lorsque des surfaces de butée (12d) dudit élément de poussée vont contre des surfaces correspondantes (11c) dudit élément de valve (11), ledit élément de valve (11) étant mobile par rapport audit élément de poussée (12) et lesdites surfaces de butée (12d) constituant une limite supérieure au mouvement dudit élément de valve (11) à l'intérieur du réservoir (2).

7. Dispositif de dosage selon la revendication 6, **caractérisé en ce que** lesdites surfaces de butée (12d) et lesdites surfaces correspondantes (11c) ont une conformation de cône tronqué.

8. Dispositif de dosage selon la revendication 6, **caractérisé en ce que** des premiers moyens formant actionneur (16) appropriés pour déplacer ledit élément de poussée (12) et des seconds moyens formant actionneur (22, 21b) aptes à déplacer ledit élément de valve (11), sont envisagés.

9. Dispositif de dosage selon la revendication 1, **caractérisé en ce que** ledit élément de valve (11) comprend une surface de cône sensiblement tronqué (11d) appropriée pour contrôler la communication entre lesdites première et seconde chambres (9, 10).

10. Dispositif de dosage selon la revendication 9, **caractérisé en ce que** l'inclinaison de ladite surface (11d) par rapport à la direction du mouvement de l'élément de valve (11) est une valeur d'environ 45°.

11. Procédé pour la distribution d'une quantité dosée d'une substance alimentaire à travers un dispositif selon l'une quelconque des revendications 1 à 10, ledit procédé comprenant les étapes consistant à :
faire s'écouler ladite substance dans ladite première chambre, ladite seconde chambre étant isolée de ladite première chambre et ledit groupe piston étant dans une première position à l'intérieur dudit réservoir ;
mettre lesdites première et seconde chambres en communication par le biais du mouvement relatif dudit élément de poussée par rapport audit élément de valve ;
fermer ladite communication entre lesdites première et seconde chambres dans une seconde position dudit groupe piston à l'intérieur dudit réservoir ;
déplacer ledit groupe piston de sorte que ladite substance est distribuée à travers lesdites ouvertures de distribution (5).
